Europäisches Patentamt

**European Patent Office**

**Office européen des brevets**

(19)

(11) Veröffentlichungsnummer: **0 167 706**
**A2**

(12)

# EUROPÄISCHE PATENTANMELDUNG

(21) Anmeldenummer: **85102339.0**

(22) Anmeldetag: **01.03.85**

(51) Int. Cl.⁴: **G 01 N 27/28**

(30) Priorität: **13.07.84 CH 3416/84**

(43) Veröffentlichungstag der Anmeldung:
**15.01.86 Patentblatt 86/3**

(84) Benannte Vertragsstaaten:
**AT DE FR GB IT NL**

(71) Anmelder: **ZELLWEGER USTER AG**
**Wilstrasse 11**
**CH-8610 Uster(CH)**

(72) Erfinder: **Mastchenko, Alec**
**Le pré Bostel**
**F-88400 Gérardmer(FR)**

(72) Erfinder: **Ertl, Stefan**
**Heusserstrasse 15**
**CH-8634 Hombrechtikon(CH)**

(72) Erfinder: **Renz, Max**
**Pfaendwiesenstrasse 15**
**CH-8152 Glattbrugg(CH)**

(74) Vertreter: **Dipl.-Phys.Dr. Manitz Dipl.-Ing., Dipl.-Wirtsch.**
**Finsterwald Dipl.-Chem.Dr. Heyn Dipl.-Phys. Rotermund**
**Morgan, B.Sc.(Phys)**
**Robert-Koch-Strasse 1**
**D-8000 München 22(DE)**

(54) **Vorrichtung zur Messung geringer Ionenaktivitäten eines Probenstroms.**

(57) Die Vorrichtung enthält eine Messzelle (1), die aus einem Messteil (2) mit einer Messelektrode (26) und einer Bezugselektrode und aus einem Mischteil (3) für die Vermischung des Probenstroms mit einem Konditionierungsmittel besteht. Der Mischteil ist durch eine vom Probenstrom durchströmte Venturi-Düse (20) gebildet, in welche im Bereich vor ihrer Verengung (21) eine Zuführungsleitung für das Konditionierungsmittel mündet. Das Konditionierungsmittel wird durch den Probenstrom in die Venturi-Düse gesaugt und wird inderen auf die Verengung folgender Erweiterung (22) mit diesem durchmischt.

Dadurch kommt es zu einer intensiven Durchmischung von Probenstrom und Konditionierungsmittel, ohne dass für die Förderung des letzteren eine spezielle Pumpe erforderlich wäre und der gewünschte pH-Wert stellt sich in de Gemisch in jedem Fall und innerhalb sehr kurzer Zeit ein.

FIG. 2

## Vorrichtung zur Messung geringer Ionenaktivitätswerte eines Probenstroms

Die Erfindung betrifft eine Vorrichtung zur Messung geringer Ionenaktivitätswerte eines Probenstroms, mit einer einen Messteil mit einer Messelektrode und einer Bezugselektrode und einen Mischteil für die Vermischung des Probenstroms mit einem Konditionierungsmittel aufweisenden Messzelle.

Derartige Vorrichtungen werden beispielsweise zur Messung der Natriumionenaktivität oder der Chloridionenaktivität in einem Wasserstrom verwendet. Die Bestimmung niedriger Ionenaktivitätswerte in einem Probenstrom ist dadurch begrenzt, dass durch das Ansprechen der Elektrode auf $H^+$ - und $OH^-$ - Ionen Störungen auftreten, welche zu merklichen Messfehlern führen. Da in sämtlichen wässrigen Probenströmen $H^+$ - und $OH^-$ - Ionen enthalten sind, ist vor der elektrochemischen Bestimmung niedriger Kationen- und Anionenaktivitätswerte eine Einstellung des pH-Werts mit einem Konditionierungsmittel von wesentlicher Bedeutung, um eine genaue Messung zu ermöglichen. Bei Zugabe einer Säure als Konditionierungsmittel wird der pH-Wert gesenkt, indem aus dem Probenstrom $OH^+$ - Inonen weggefangen werden, bei Zugabe einer Base als Konditionierungsmittel wird der pH-Wert erhöht, indem $H^+$ - Ionen im Probenstrom weggefangen werden.

Dabei soll jedoch das Konditionierungsmittel dem Probenstrom nicht in flüssiger Form zugegeben werden, da dies zu einer Verdünnung des Probenstroms führen würde, was zur Messung der Konzentration eine genaue und konstante Dosierung der dem Probenstrom zugegebenen Volumina erfordern würde. Zudem kann durch das flüssige Konditionierungsmittel der Probenstrom mit Fremdionen verunreinigt werden.

Diese Nachteile werden bei einer bekannten Vorrichtung der eingangs genannten Art dadurch vermieden, dass man zur Erhöhung des pH-Wertes als Konditionierungsmittel ein alkalisches Gas verwendet und dieses in den Probenstrom einperlen lässt. Dies erfordert aber die Verwendung einer zusätzlichen Pumpe, damit sichergestellt ist, dass die erforderlichen Volumina von Gas und Probenstrom miteinander in Berührung gelangen.

Bei einer anderen bekannten, in der US-PS 4 131 428 beschriebenen Vorrichtung wird der Probenstrom über die eine Seite einer inerten, für Reaktionsteilnehmer permeablen, für Ionen dagegen nicht-permeablen, nicht-benetzungsfähigen Membran geleitet, deren andere Seite mit Reaktionsteilnehmernachschub in Berührung steht. Dazu ist zwar keine Pumpe erforderlich, es hat
sich aber gezeigt, dass die Diffusionsrate des Konditionierungsmittels durch
die Membran in manchen Fällen zu gering ist, um den erforderlichen pH-Wert
zu erreichen. Dies ist insbesondere deswegen der Fall, weil die Diffusionsrate durch die Membran temperaturabhängig ist.

So muss beispielsweise für die Messung der $Na^+$ - Aktivitäten der pH-Wert des
Probenstroms auf einen Wert über 10 eingestellt werden. Falls der pH-Wert
des Probenstroms jedoch ursprünglich nicht grösser als 7 ist oder eine Pufferkapazität von 2 Millimol pro Liter aufweist, dann kann mit der Vorrichtung nach der US-PS 4 131 428 ein pH-Wert über 10 gar nicht erreicht werden.

Durch die Erfindung soll nun eine Vorrichtung zur Messung der Ionenaktivitätswerte eines Probenstroms geschaffen werden, bei welcher die Zugabe des
Konditionierungsmittels an den Probenstrom keine zusätzliche Pumpe erfordert
und der gewünschte pH-Wert in jedem Fall und innerhalb möglichst kurzer Zeit
eingestellt werden kann.

Diese Aufgabe wird erfindungsgemäss dadurch gelöst, dass der Mischteil durch
eine vom Probenstrom durchströmte Venturi-Düse gebildet ist, in welche im
Bereich vor ihrer Verengung eine Zuführungsleitung für das Konditionierungsmittel mündet, sodass das Konditionierungsmittel durch den Probenstrom in
die Düse gesaugt und in deren auf die Verengung folgender Erweiterung mit
diesem durchmischt wird.

Vorteilhafte Ausgestaltung der erfindungsgemässen Vorrichtung sind in der
nachfolgenden Beschreibung und in den Unteransprüchen angegeben.

Nachstehend wird die Erfindung anhand eines Ausführungsbeispiels und der
Zeichnungen näher erläutert; es zeigen:

Fig. 1   ein Durchfluss-Schema einer Anordnung zur Messung von $Na^+$ -
         Aktivitäten mit einer erfindungsgemässen Vorrichtung,

Fig. 2   eine Ansicht der Messzelle einer erfindungsgemässen Vorrichtung, in
         leicht verkleinertem Massstab,

Fig. 3 einen Schnitt - bezogen auf Fig. 2 parallel zur Zeichenebene - durch den Mischteil der Messzelle von Fig. 2, in vergrössertem Massstab,

Fig. 4 eine Ansicht des Messteils der Messzelle in Richtung des Pfeiles IV von Fig. 2,

Fig. 5 einen Schnitt nach der Linie A-A von Fig. 4,

Fig. 6 einen Schnitt nach der Linie B-B von Fig. 4 und

Fig. 7 einen Schnitt nach der Linie C-C von Fig. 4.

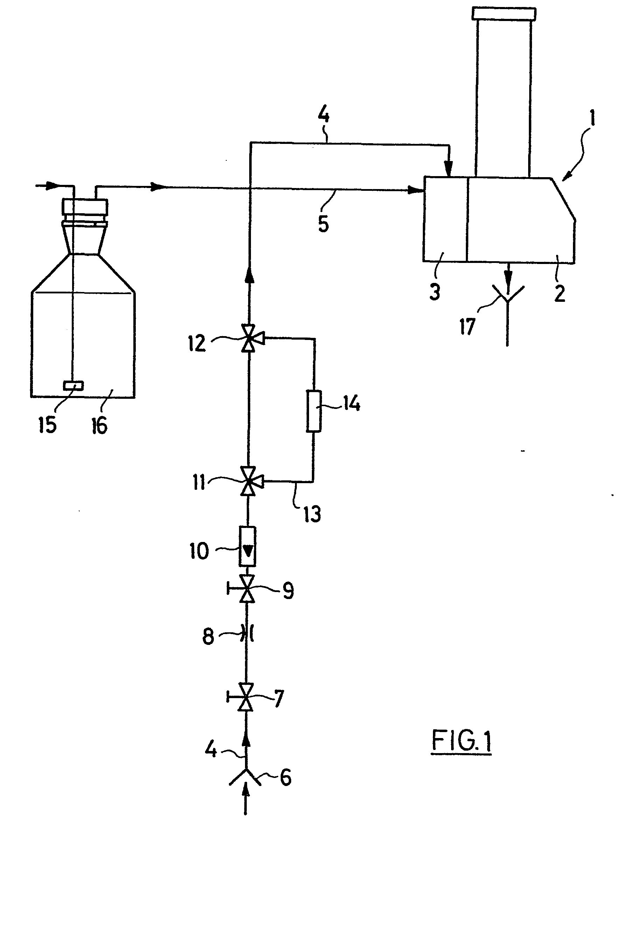

Die Vorrichtung zur Messung der Ionenaktivitätswerte, im dargestellten Fall der $Na^+$ - Aktivitätswerte, eines Probenstroms besteht gemäss Fig. 1 aus einer Messzelle 1 mit einem Messteil 2 und einem Mischteil 3, in welchen zwei Leitungen 4 und 5 münden, und zwar die Leitung 4 für den Probenstrom und die Leitung 5 für das Konditionierungsmittel, welches im dargestellten Fall der $Na^+$ - Messung ein Alkalisierungsmittel ist.

Die Leitung 4 für den Probenstrom enthält, in Flussrichtung des Probenstroms, einen Eingang 6 für den Probenstrom, ein Handventil 7, einen Druckregler 8 zur Einstellung eines konstanten Drucks des Probenstroms, ein Nadelventil 9 zur Einstellung des erforderlichen Durchflusses, einen Durchflussmesser 10 und zwei Umschaltventile 11 und 12, über die der Probenstrom wahlweise über einen Zweig für die Eichung der Vorrichtung geleitet werden kann. Dieser Zweig 13 enthält eine Eicheinrichtung 14 mit einer Eichsubstanz. Die Eicheinrichtung 14, welche nicht Gegenstand der vorliegenden Erfindung bildet, ist in der Parallelanmeldung "Verfahren und Vorrichtung zur Messung geringer Aktivitätswerte von Ionen eines Probenstroms in einem Analyseautomaten" vom 18. Juli 1984 der Anmelderin der vorliegenden Patentanmeldung (Zeichen der Anmelderin ZAG 8 84 02, CH-Patentanmeldung Nr. beschrieben.

Ueber die Leitung 5 für das Alkalisierungsmittel wird Luft angesaugt und über eine Glasfritte 15 in einem Gefäss 16 mit $NH_4OH$ oder Diisopropylamin geführt, wodurch die Luft mit $NH_3$ gesättigt wird. Die mit $NH_3$ gesättigte Luft, die somit das Alkalisierungsmittel bildet, wird im Mischteil 3 der Messzelle 1 mit dem Probenstrom von der Leitung 4 intensiv gemischt, wodurch dessen pH-Wert auf einen Wert über 10 ansteigt. Anschliessend strömt das Ge-

misch aus Probenstrom und $NH_3$-gesättigter Luft durch den Messteil 2 und gelangt schliesslich in einen Ablauf 17.

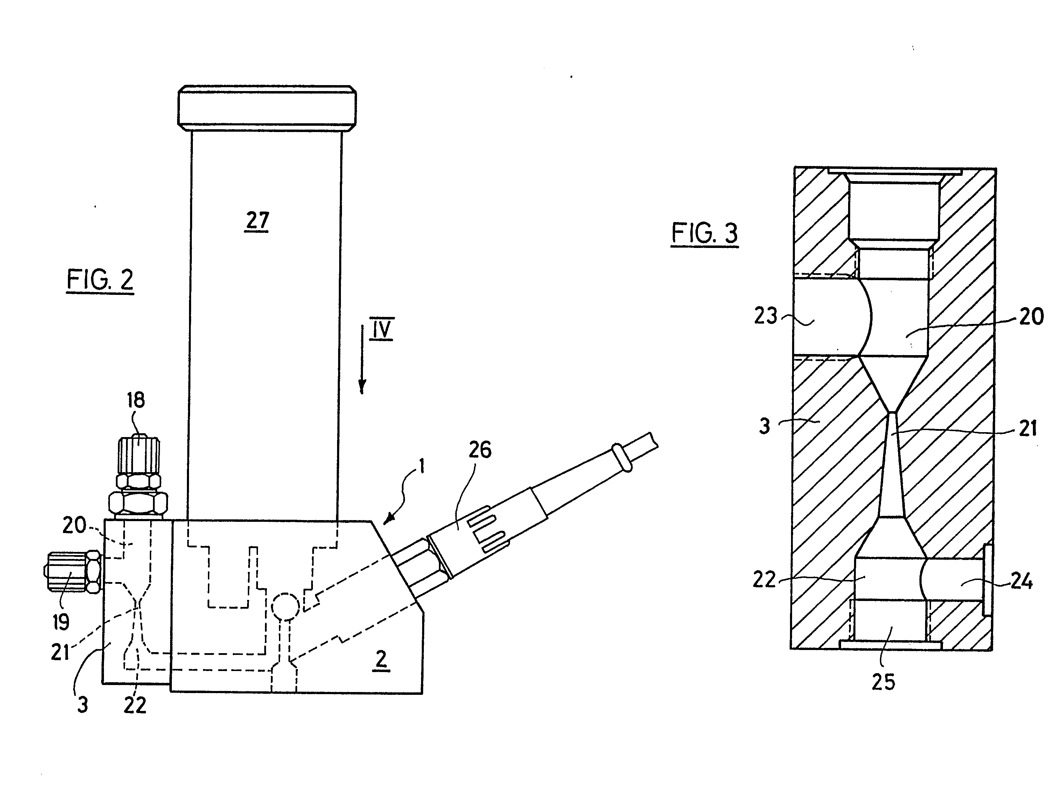

In Fig. 2 erkennt man am Mischteil 3 der Messzelle 1 einen Anschluss 18 für den Probenstrom und einen Anschluss 19 für das Alkalisierungsmittel. An den Anschluss 18 schliesst eine Venturi-Düse 20 an, die in bekannter Weise eine Querschnittsverengung 21 und eine an diese anschliessende Erweiterung 22 aufweist, was am besten aus Fig. 3 erkennbar ist. In die Venturi-Düse 20 mündet in deren Bereich vor der Verengung 21 eine Leitung 23 vom Anschluss 19. Dadurch besteht in der Venturi-Düse 20 eine Saugwirkung des Probenstroms auf die Leitung 5, durch welche die Luft ohne zusätzliche Hilfsmittel in die Leitung 5, durch die Glasfritte 15 und in die Venturi-Düse 20 gesaugt wird. In der Erweiterung 22 der Venturi-Düse 20 wird die mit $NH_3$ gesättigte Luft intensiv mit dem Probenstrom vermischt und das so gebildete Gemisch gelangt über eine Leitung 24 in den Messteil 2 der Messzelle 1. Die Venturi-Düse weist im Anschluss an die Abzweigung der Leitung 24 nach unten hin eine Verlängerung 25 auf, die im Normalfall durch eine Stopfen verschlossen ist. Dieser Stopfen kann zu Reinigungszwecken herausgeschraubt werden, was eine einfache Reinigung der Venturi-Düse 20 ermöglicht.

Der Messteil 2 der Messzelle 1 enthält im wesentlichen eine aus einer natriumselektiven Messelektrode 26 und aus einer Ag/AgCl-Bezugselektrode (nicht eingezeichnet) bestehende Messkette. Das Gemisch aus Probenstrom und $NH_3$-gesättigter Luft strömt an der Messelektrode 26 vorbei, wogegen die Bezugselektrode in einen passenden Elektrolyten, beispielsweise KCl oder LiCl bestimmter Konzentration eingetaucht ist. Zwischen dem an der Messelektrode 26 vorbeiströmenden Messmedium und dem Elektrolyten besteht eine leitende Verbindung. Auf die obere Deckfläche des Messteils 2 ist ein Vorratsgefäss 27 für den Elektrolyten in Form eines Schauglases aufgeschraubt.

Im übrigen wird bezüglich der Messelektrode 26 und der Bezugselektrode und auch bezüglich der Leitung 5 für das Alkalisierungsmittel mit der Glasfritte 15 in dem Gefäss 16 (Fig. 1), sowie bezüglich der verschiedenen Betriebsparameter der Vorrichtung auf das von der Firma POLYMETRON, einer Tochtergesellschaft der ZELLWEGER USTER AG, hergestellte und weltweit vertriebene $Na^+$ - Analysegerät SODIMAT verwiesen.

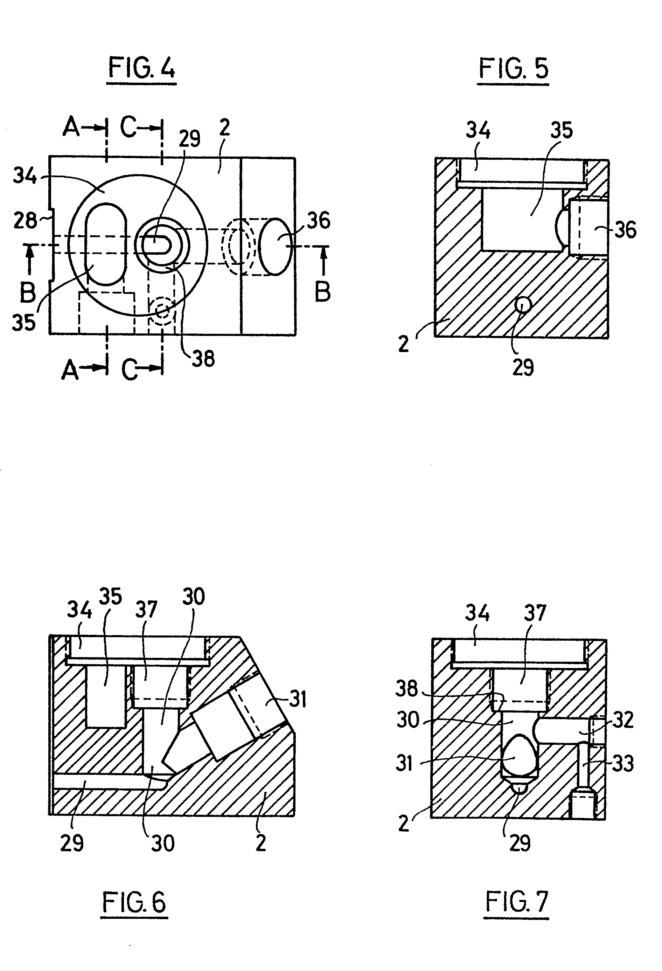

Aus den Fig. 4 bis 7, die verschiedene Ansichten bzw. Schnittdarstellungen des Messteils 2 zeigen, ist dessen detaillierter Aufbau ersichtlich. Dabei ist in den Figuren jeweils nur der Grundkörper des Messteils 2 ohne jede in diesen eingeschraubte oder sonstwie an diesem befestigte Teile dargestellt. Dieser Grundkörper besteht aus Plexiglas und ist aus einem Stück gefertigt, der Mischteil 3 ist, wie aus Fig. 2 ersichtlich, seitlich am Grundkörper befestigt, vorzugsweise mit diesem verschraubt, wobei die gegenseitige Zentrierung mittels einer Nut 28 (Fig. 4) im Grundkörper und eines entsprechenden Steges aus Mischteil 3 erfolgt.

Gemäss den Fig. 4 bis 7 weist der Messteil 2 an seiner mit der Nut 28 versehenen Stirnseite eine von dort ausgehende horizontale Bohrung 29 auf, die mit der Leitung 24 des Mischteils 3 (Fig. 3) fluchtet und somit den Eingangskanal für das Messmedium bildet. Die Bohrung 29 mündet in das untere Ende einer vertikalen Kammer 30, in welche ausserdem eine Oeffnung 31 für die Messelektrode 26 (Fig. 2) mündet und von welcher eine Seitenast 32 abzweigt, der einerseits nach aussen führt und von dem anderseits ein vertikaler Zweig 33 abzweigt, der zum Ablauf 17 (Fig. 1) führt. Die an der in Fig. 7 rechten Seitenwand liegende Mündung des Seitenasts 32 ist im betriebbereiten Zustand der Messzelle 1 durch eine Erdungsschraube abgeschlossen, in die ein Halbleitersensor oder ein anderes bekanntes Temperaturmesselement zur Temperaturkompensation integriert ist.

Das durch die Bohrungen und Kammern 29 bis 33 gebildete System stellt den vom Messmedium durchströmten Teil des Messteils 2 dar. Für die Bezugselektrode und den Elektrolyten ist ebenfalls ein System von mehreren Kammern vorgesehen. Darstellungsgemäss befindet sich an der oberen Deckfläche des Messteils 2 eine Sackbohrung 34 die zum Einschrauben des Vorratsgefässes 27 (Fig. 2) für den Elektrolyten vorgesehen ist. Vom Grund der Sackbohrung 34 geht eine Kammer 35 aus, in welche seitlich eine Oeffnung 36 für die Bezugselektrode mündet. Ebenfalls vom Grund der Sackbohrung 34 geht eine mit der Kammer 30 des Messmedium-Systems fluchtende Bohrung 37 aus, die an einer Abstufung 38 in die Kammer 30 übergeht. Die Abstufung 38 bildet die Schnittstelle zwischen dem Messmedium-System und dem Elektrolyt-System. An dieser Schnittstelle ist ein Diaphragma angeordnet, über welches die leitende Verbindung zwischen dem Messmedium und dem Elektrolyten hergestellt ist. Die konstruktive Ausgestaltung des Messteils 2, insbesondere der Kammer 35,

**0167706**

hat den Vorteil, dass die Bezugselektrode stets vom Elektrolyten umspült ist und daher nicht austrocknen kann.

Wenn die erfindungsgemässe Vorrichtung in der vorangehenden Beschreibung auch in der Anwendung als $Na^+$-Analysator beschrieben ist, so soll dies nicht als Einschränkung verstanden werden. Denn es ist für den Fachmann klar, dass die Vorrichtung auch für die Messung von Anionenaktivitäten, beispielsweise von Chlorid- oder Fluoridionen, und für andere Messungen, beispielsweise für die Messung von freiem Chlor, verwendet werden kann. Dies würde zwar gewisse - im Verständnis des Fachmanns liegende - Anpassungen bezüglich Konditionierungsmittel, Messelektrode und Bezugselektrode bedingen, wobei jedoch am Aufbau der Messzelle, d.h. am Grundkörper von deren Messteil sowie am Mischteil nichts geändert zu werden brauchte.

Patentansprüche

1. Vorrichtung zur Messung geringer Ionenaktivitätswerte eines Probenstroms, mit einer einen Messteil mit einer Messelektrode und einer
   Bezugselektrode und einen Mischteil für die Vermischung des Probenstroms mit einem Konditionierungsmittel aufweisenden Messzelle, dadurch gekennzeichnet, dass der Mischteil (3) durch eine vom Probenstrom
   durchströmte Venturi-Düse (20) gebildet ist, in welche im Bereich vor
   ihrer Verengung (21) eine Zuführungsleitung (23) für das Konditionierungsmittel mündet, sodass das Konditionierungsmittel durch den Probenstrom in die Düse gesaugt und in deren auf die Verengung folgender Erweiterung (22) mit diesem durchmischt wird.

2. Vorrichtung nach Anspruch 1, dadurch gekennzeichnet, dass der Messteil
   (2) der Messzelle (1) je ein System von Leitungen und Kammern für das
   Gemisch aus Konditionierungsmittel und Probenstrom einerseits und für
   den Elektrolyten der Bezugselektrode anderseits aufweist, welche beiden
   Systeme an einer Schnittstelle (38) über ein Diaphragma miteinander
   elektrisch leitend verbunden sind, und dass die Bezugselektrode in einer
   von der das Diaphragma enthaltenden Kammer (37, 38) räumlich getrennten
   Kammer (35) des Systems für den Elektrolyten angeordnet ist.

3. Vorrichtung nach Anspruch 2, dadurch gekennzeichnet, dass die Kammer
   (35) für die Bezugselektrode und die das Diaphragma enthaltende Kammer
   (37, 38) als Seitenkammern einer gemeinsamen Kammer (34) ausgebildet
   sind.

4  Vorrichtung nach Anspruch 3, dadurch gekennzeichnet, dass die gemeinsame
   Kammer (34) durch eine Sackbohrung an der oberen Deckfläche des Messteils (2) gebildet ist, in welche ein Vorratsgefäss (27) für den Elektrolyten eingesetzt ist, und an deren Grundfläche die Kammer (35) für die
   Bezugselektrode und die das Diaphragma enthaltende Kammer (37, 38)
   angeordnet sind.

5. Vorrichtung nach Anspruch 1, dadurch gekennzeichnet, dass die Venturi-
   Düse (20) an ihrer auf die Verengung (21) folgenden Erweiterung (22)
   eine zum Messteil (2) führende Abzweigung (24) sowie eine achsiale, in die benachbarte Seitenfläche des Mischteils (3) mündende Verlängerung
(25) aufweist, welch letztere im Betriebszustand durch einen Stopfen
verschlossen ist.

6. Vorrichtung nach Anspruch 5 und einem der Ansprüche 2 bis 4, dadurch
   gekennzeichnet, dass der Messteil (2) einen mit der Abzweigung (24) der
   Venturi-Düse (20) fluchtenden Zuführkanal (29) für das Gemisch aus
   Konditionierungsmittel und Probenstrom aufweist, welcher in eine zur
   Messelektrode (26) führende Messkammer (30) mündet.

7. Vorrichtung nach den Ansprüchen 2 und 6, dadurch gekennzeichnet, dass
   die Messkammer (30) über das Diaphragma mit der dieses enthaltenden
   Kammer (37, 38) verbunden ist.

8. Vorrichtung nach Anspruch 7, dadurch gekennzeichnet, dass die Messkammer
   (30) eine in eine Seitenfläche des Messteils (2) mündende Abzweigung
   (32) aufweist, von welcher eine zu einem Ablauf (17) führende Leitung
   (33) abzweigt.

9. Vorrichtung nach Anspruch 8, dadurch gekennzeichnet, dass die Abzweigung
   (32) im Betriebszustand durch eine Erdungsschraube abgeschlossen ist.

10. Vorrichtung nach Anspruch 9, dadurch gekennzeichnet, dass in die
    Erdungsschraube ein Sensor zur Temperaturkompensation integriert ist.

0167706

FIG.1

FIG. 2

FIG. 3

27

18

1

26

20

19

21

3  22

2

$\underline{IV}$

23

20

3

21

22

24

25

FIG. 4

FIG. 5

FIG. 6

FIG. 7